# EUROPÄISCHE PATENTSCHRIFT

(11) **EP 0 762 082 B1**
(45) Veröffentlichungstag und Bekanntmachung des Hinweises auf die Patenterteilung: **17.03.2004**
(21) Anmeldenummer: 95118933.1
(22) Anmeldetag: 01.12.1995
(51) Int. Cl.: G01D 5/02, G01D 5/26

(54) **Winkelmesseinrichtung**
Angular position measuring device
Capteur de position angulaire

(30) Priorität: 06.09.1995 DE 19532824
(43) Veröffentlichungstag der Anmeldung: 12.03.1997
(73) Patentinhaber: Dr. Johannes Heidenhain GmbH, 83292 Traunreut (DE)
(72) Erfinder: Feichtinger, Kurt, D-83349 Palling (DE); Mitterreiter, Johann, D-83339 Chieming (DE)

(56) Entgegenhaltungen:
- EP-A- 0 280 390
- US-A- 4 472 713

## Beschreibung

Die Erfindung bezieht sich auf eine Winkelmeßeinrichtung gemäß dem Oberbegriff des Anspruches 1.

Kupplungen werden häufig zwischen einem Stator - beispielsweise einem Gehäuse oder einem Anbauflansch - und einer Abtasteinrichtung einer Winkelmeßeinrichtung eingesetzt. Anwendung finden Kupplungen auch zum drehstarren Verbinden eines Gehäuses oder Anbauflansches der Winkelmeßeinrichtung mit einem Gehäuse einer Antriebseinrichtung, bei der die Winkellage der rotierenden Welle gemessen werden soll.

Aus der DE-29 06 432-C2 ist eine Koppeleinrichtung zwischen den drehenden Wellen einer Winkelmeßeinrichtung und einem zu messenden Objekt sowie zwischen den Statoren der Winkelmeßeinrichtung und dem zu messenden Objekt bekannt. Die Wellen sind dabei starr ohne Ausgleichsmöglichkeit miteinander verbunden und die Statoren sind über eine Parallelführung nachgiebig jedoch undrehbar miteinander verbunden. Taumelbewegungen der Wellen werden optimal über zwei senkrecht zueinander angeordneten Parallelführungen ausgeglichen, ohne daß jeweils die Wellen und die Statoren eine Verdrehung gegeneinander durchführen können. Die Kupplung in Form zumindest einer Parallelführung führt dabei keine Drehbewegungen aus. Die Befestigung der Kupplung am zu messenden Objekt ist nicht erläutert.

Eine ähnliche Winkelmeßeinrichtung mit einer Kupplung zwischen einem Motorgehäuse und einem Gehäuse (Stator) einer Winkelmeßeinrichtung ist in der US-PS 4,386,270 beschrieben. Die Kupplung ist eine Balgkupplung, die mittels eines Montageflansches axial an das Motorgehäuse angeschraubt wird.

Um eine Taumelbewegung des Gehäuses (Stator) der Winkelmeßeinrichtung zu vermeiden, ist gemäß der DE-32 06 875-C2 und der DE-33 01 205-C2 die Kupplung innerhalb der Winkelmeßeinrichtung angeordnet. Bei der DE-32 06 875-C2 besteht die Kupplung aus einem innerhalb des Gehäuses der Winkelmeßeinrichtung angeordneten Zwischenring, der einerseits über ein Paar von diametral angeordneten Federn mit der stationären Abtasteinrichtung und andererseits über ein 90° dazu versetztes Paar von diametral angeordneten Federn mit dem Gehäuse der Winkelmeßeinrichtung verbunden ist. Bei der DE-33 01 205-C2 besteht die Kupplung aus einem Federbalg, der koaxial zur Geberwelle angeordnet ist und die Abtasteinrichtung mit dem Gehäuse der Winkelmeßeinrichtung verbindet.

Die DE-89 15 109-U1 betrifft eine Winkelmeßeinrichtung mit einer einstückig ausgebildeten Kupplung mit vier um jeweils 90° gegeneinander versetzten Blattfederarmen, die parallel zur Drehachse der Wellen ausgerichtet sind. Diese Blattfederarme bilden zwei senkrecht zueinander angeordnete Federparallelogramme. Auch hier sind die Federarme der Kupplung axial an eine Antriebseinheit angeschraubt.

Die DE-88 12 317-U1 und die JP-62-155313-U betreffen ebenfalls Winkelmeßeinrichtungen, bei denen die Abtasteinrichtung über eine Kupplung an einem Objekt befestigt ist. Radial nach außen weisende Federbleche weisen einen gemeinsamen äußeren Montagering auf. In der DE-88 12 317-U1 wird vorgeschlagen, den Montagering über Bohrungen an einem Objekt zu befestigen und in der JP-62-155313-U sind hierzu axiale Bohrungen im Montagering und axiale Gewindebohrungen im Objekt vorgesehen.

Aufgabe der Erfindung ist es, eine Winkelmeßeinrichtung mit einer Kupplung zu schaffen, die äußerst kompakt und einfach zu montieren ist, sowie eine genaue Ankopplung gewährleistet.

Diese Aufgabe wird durch die Merkmale des Anspruches 1 gelöst.

Die mit der Erfindung erzielten Vorteile bestehen insbesondere darin, daß die Kupplung wenig Raum beansprucht, eine reibungsfreie und hochgenaue Winkelübertragung zwischen den zwei zu verbindenden Teilen zuläßt und mit der trotzdem Verlagerungen der miteinander zu kuppelnden Teile sowohl radial als auch axial ausgeglichen werden, wobei die Winkelmeßeinrichtung sehr einfach montierbar ist.

Vorteilhafte Ausbildungen der Erfindung entnimmt man den abhängigen Ansprüchen.

Ausführungsbeispiele der Erfindung sind in den Zeichnungen dargestellt.

Es zeigt
- Figur 1: eine Ansicht einer Winkelmeßeinrichtung mit einer Kupplung;
- Figur 2: eine perspektivische Ansicht einer Kupplung;
- Figur 3: eine Variante der Kupplung;
- Figur 4: eine Draufsicht einer Kupplung mit Montageelement;
- Figur 5: einen Querschnitt der Kupplung nach Figur 4;
- Figur 6: eine Draufsicht einer weiteren Kupplung mit einem Montageelement;
- Figur 7: einen Querschnitt der Kupplung nach Figur 6;
- Figur 8: schematisch ein Montageelement mit einem Klemmelement;
- Figur 9: das Klemmelement gemäß Figur 8 im geklemmten Zustand;
- Figur 10: eine Draufsicht eines weiteren Ausführungsbeispieles und
- Figur 11: einen Teilschnitt der Ausführungsform gemäß Figur 10.

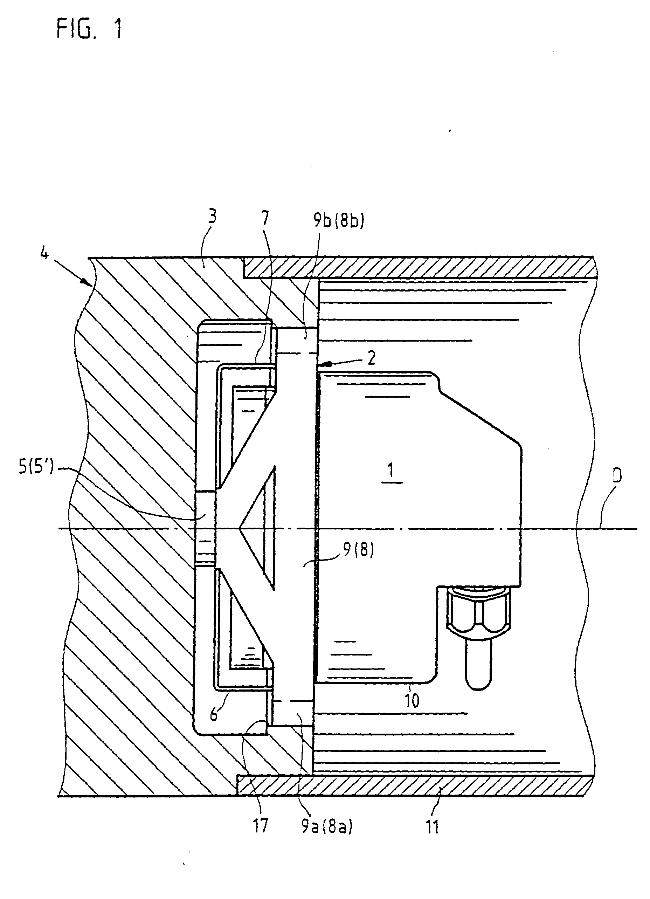

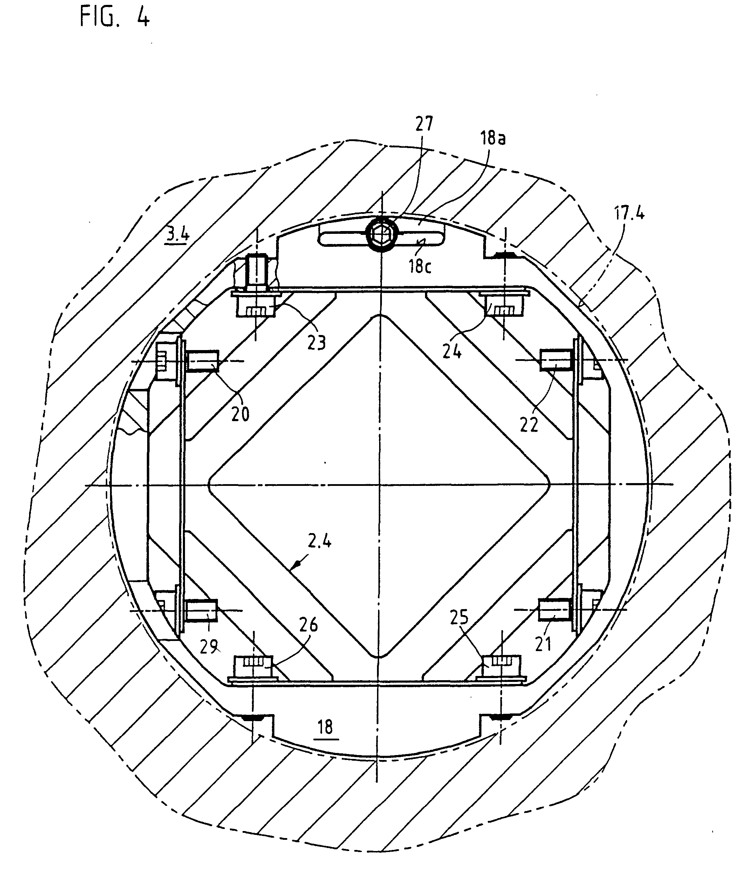

Eine in Figur 1 gezeigte Winkelmeßeinrichtung 1 ist über eine Kupplung 2 mit dem Stator 3 einer Antriebseinrichtung 4 verbunden. Die Welle 5 der Winkelmeßeinrichtung 1 ist starr mit der Welle 5' der Antriebseinrichtung 4 gekoppelt. Freie Enden von achsparallelen Blattfederarmen 6 und 7 sind mittels Schrauben, die in Figur 4 sichtbar sind, mit dem Stator 10 der Winkelmeßeinrichtung 1 verbunden. Ein Gehäuse 11 umschließt die Antriebseinrichtung 4 sowie die Winkelmeßeinrichtung 1. Der Stator 3 der Antriebseinrichtung 4 ist beispielsweise der stationäre Teil eines Motors. Der Stator 10 der Winkelmeßeinrichtung 1 ist ein stationärer Teil der Winkelmeßeinrichtung, beispielsweise ein Montageflansch, die Abtasteinrichtung oder das Gehäuse der Winkelmeßeinrichtung.

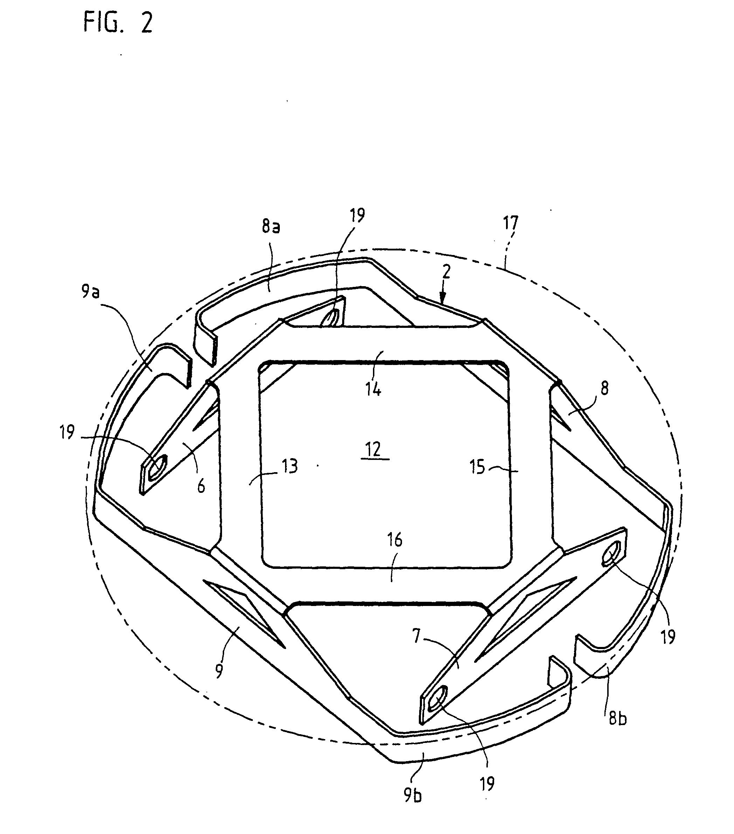

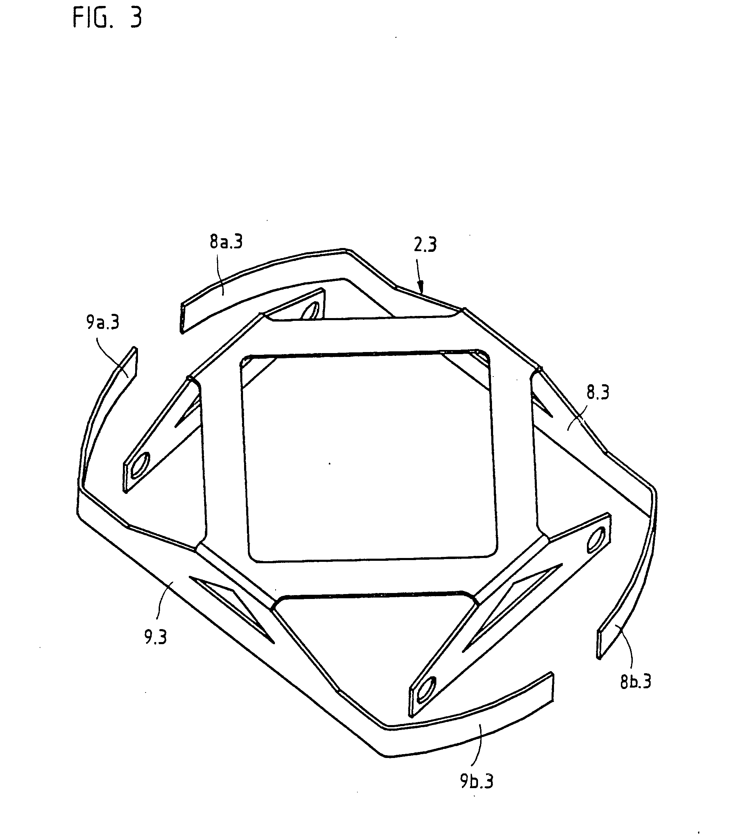

Die in den Figuren 2 und 3 gezeigte Kupplung 2 ist einstückig als Stanz- und Biegeteil ausgebildet und aus einem Material mit hoher Wechselfestigkeit, z.B. Federstahl, hergestellt. Die Kupplung 2 weist einen ebenen Mittenbereich mit vier im wesentlichen parallel zur Drehachse D verlaufenden Blattfederarmen 6, 7; 8, 9 auf, von denen je zwei (6 und 7 bzw. 8 und 9) diametral gegenüberliegend angeordnet sind. Die Blattfederarme 6, 7, 8, 9 sind zumindest weitgehend parallel zu der gemeinsamen Drehachse D der zu verbindenden Teile 1 und 4 ausgerichtet. Sie sind paarweise diametral gegenüberliegend und parallel zueinander angeordnet und bilden somit zwei senkrecht zueinander angeordnete Federparallelogramme, die eine verdrehsteife, jedoch radial nachgiebige Verbindung der zwei Teile 1 und 4 gewährleisten.

Die Kupplung 2 weist im Mittenbereich eine zentrische Öffnung 12 auf, die nach Art eines Fachwerkes von weiteren Blattfederarmen 13, 14, 15, 16 umgeben ist. Diese Blattfederarme 13, 14, 15, 16 gewährleisten eine verdrehsteife, jedoch axial in Richtung der Drehachse D nachgiebige Verbindung der zwei Teile 1 und 4.

Die zwei sich jeweils diametral gegenüberliegenden und senkrecht zu dem ebenen Mittenbereich 12 umgebogenen Blattfederarme 6, 7, 8, 9 sind vorteilhafterweise ebenfalls fachwerkartig, aber als Dreiecke ausgebildet, damit von den Wellen 5, 5' auf die Winkelmeßeinrichtung 1 einwirkende Drehmomente gut aufgenommen werden und nicht zu einer Verdrehung beider Statoren 3 und 10 führt.

In zweien dieser sich gegenüber liegenden Blattfederarmen 6, 7 befinden sich jeweils zwei Langlöcher 19 deren Längsachsen parallel zur Drehachse D verlaufen. Die Langlöcher 19 erlauben eine Justierung zwischen den zwei zu koppelnden Teilen 3, 10 bei der Befestigung mittels Schrauben an der Winkelmeßeinrichtung 1.

Die beiden anderen sich gegenüber liegenden Blattfederarme 8 und 9 weisen - als Verlängerung ihrer Basis - annähernd kreisförmig gebogene Blattfederarme 8a, 8b; 9a, 9b auf. Diese Blattfederarme 8a, 8b; 9a, 9b sind radial vorgespannt, so daß sie beim Einsetzen in einen Tubus 17, der an der Antriebseinrichtung 4 vorgesehen ist, zusammengedrückt werden müssen. Nach dem Einsetzen in den Tubus 17 spreizen sich die Blattfederarme 8a, 8b; 9a, 9b und durch den radialen nach außen gerichteten Anteil der Spreizkräfte wird die Winkelmeßeinrichtung 1 in der Antriebseinheit 4 verdrehsicher fixiert. Die radialen und axialen Ausgleichsbewegungen und Winkelfluchtungsfehler werden problemlos ausgeglichen.

Wenn die Blattfederarme 8a, 8b; 9a, 9b an ihren freien Enden radial nach innen umgebogen sind - wie in Figur 2 dargestellt ist -, lassen sich die Blattfederarme 8a, 8b; 9a, 9b auch noch mit Hilfe von nicht dargestellten Schrauben oder dergleichen spreizen, um den Anpreßdruck an den Innenmantel des zylindrischen Tubus 17 zu erhöhen. In Figur 2 ist der Tubus 17 mit einer Doppelpunkt-/Strich-Linie angedeutet.

In nicht gezeigter Weise läßt sich im Tubus ein Formschluß erzielen, wenn die freien Enden der Blattfederarme radial nach außen umgebogen sind. Sie greifen dann beispielsweise in diametral im Tubus angeordnete Nuten ein, die entsprechend dimensioniert sind, um eine Drehbewegung zwischen dem Tubus und der Kupplung zu verhindern.

Die in Figur 2 dargestellte fachwerkartige Ausbildung der Blattfederarme 6, 7, 8, 9 sowie 13, 14, 15, 16 ist für die Erfindung nicht zwingend erforderlich. Die Blattfederarme können beispielsweise auch gemäß der DE-89 15 109-U1 oder der DE-88 12 317-U1 ausgebildet und angeordnet sein. Wesentlich ist, daß die Kupplung 2 gut verdrehsteif ist und ausschließlich axiale sowie radiale Bewegungen zwisehen den beiden zu verbindenden Teilen 3 und 10 zuläßt. Eine Kupplung in Form von zwei senkrecht zueinander angeordneten Federparallelogrammen ist besonders vorteilhaft.

Im wesentlichen entspricht die in Figur 3 gezeigte Kupplung 3 dem in Figur 2 gezeigten Ausführungsbeispiel, weshalb auf die Erläuterung von gleichwirkenden Elementen zur Vermeidung von Wiederholungen verzichtet wird.

In Figur 4 ist eine Draufsicht auf eine Kupplung 2.4 mit einem Montageelement 18 gezeigt. Schrauben 29, 20, 21, 22 dienen der Befestigung der Kupplung 2.4 an der nicht dargestellten Winkelmeßeinrichtung, wie zu Figur 1 bereits angedeutet wurde. Das Montageelement 18 ist als Ringelement ausgebildet, welches im wesentlichen kreisringförmig ist. Über weitere Schrauben 23, 24, 25, 26 ist die Kupplung 2.4 mit diesem ringförmigen Montageelement 18 verbunden.

Zur Aufnahme der Winkelmeßeinrichtung mit dem Montageelement 18 weist der Stator 3.4 der Antriebseinheit 4 einen Tubus 17.4 auf, der einen bestimmten Innendurchmesser hat, welcher auf den Außendurchmesser des Montageelementes 18 abgestimmt ist.

Die vormontierte Einheit Winkelmeßeinrichtung/Montageelement wird in den Tubus 17.4 eingeführt und das Montageelement 18 wird mittels eines als Klemmelement ausgebildeten Spreizkörpers 18a im Tubus 17.4 fixiert. Im Ausführungsbeispiel ist der Spreizkörper 18a als Kreissegment ausgestaltet, welches durch einen lösbaren Abschnitt des Montageelementes 18 gebildet wird.

Das Kreissegment 18a weist auf seiner dem Außenumfang des Montageelementes 18 abgewandten planen Abschnittsfläche eine konische Teilbohrung 18b auf. Das Montageelement 18 weist auf einer der planen Abschnittsfläche des Kreissegmentes 18a gegenüberliegenden, ebenfalls planen Fläche 18c auch eine konische Teilbohrung 18d auf, welche mit der Teilbohrung 18b des Kreissegmentes 18a korrespondiert. Eine konische Schraube 27, deren Konus dem der beiden korrespondierenden Teilbohrungen 18b, 18d entspricht, wirkt als Betätigungselement mit einem Gegengewinde 28 zusammen, das sich im Montageelement 18 befindet. Beim Eindrehen der konischen Schraube 27 in das Gegengewinde 28 am Montageelement 18 gleitet die Schraube 27 in den beiden Teilbohrungen 18b, 18d und spreizt diese, so daß das Kreissegment 18a vom Montageelement 18 abgedrückt und gegen die Innenfläche des Tubus 17.4 gepreßt wird.

Durch diesen Vorgang wird auf einfachste Weise die Einheit Winkelmeßeinrichtung, Kupplung und Montageelement in der Antriebseinheit 4 fixiert.

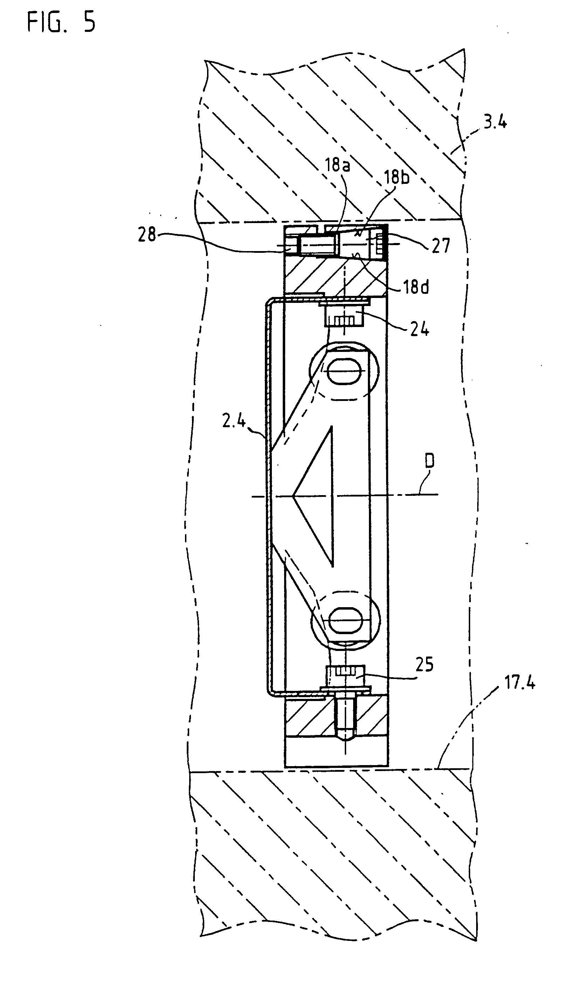

In Figur 5 ist ein Querschnitt durch die Vorrichtung gemäß Figur 4 gezeigt. Besonders deutlich werden hier die konische Schraube 27 und die gleichermaßen konischen Teilbohrungen 18b, 18d in dem Montageelement 18 und dem Kreissegment 18a. Der Tubus 17.4 der Antriebseinheit ist mit Doppelpunkt-/-Strich-Linien dargestellt.

Besonders vorteilhaft ist es, wenn der Spreizkörper ein Teil des Montageelementes selbst ist, indem dieses Teil beispielsweise über eine Schwachstelle mit dem Montageelement verbunden ist und über ein Betätigungselement - beispielsweise eine Schraube - radial gegen eine radial verlaufende Innen- oder Außenfläche andrückbar ist. Das Montageelement ist so stabil ausgestaltet, daß es die Gegenkraft des Betätigungselementes aufnimmt, so daß sich ausschließlich der Spreizkörper deformiert und keine Kraft auf die Kupplung wirkt.

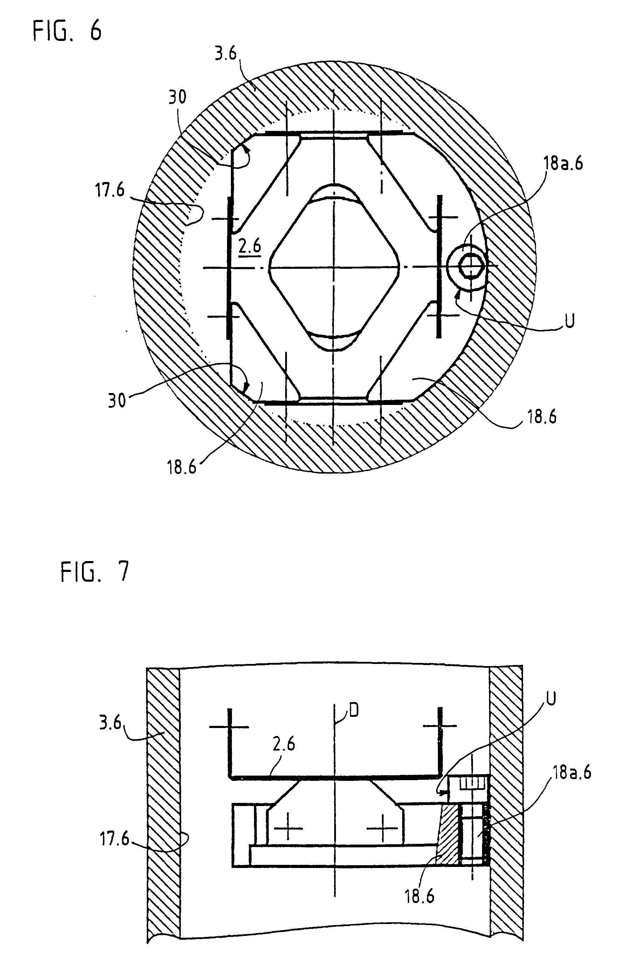

In Figur 6 ist eine Draufsicht eines weiteren Ausführungsbeispieles der Erfindung dargestellt. Auch bei diesem Beispiel ist die Abtasteinheit der nicht dargestellten Winkelmeßeinrichtung über die Kupplung 2.6 radial und axial nachgiebig mit dem Stator 3.6 einer Antriebseinrichtung gekoppelt. Zur einfachen Befestigung der Kupplung 2.6 mit der Winkelmeßeinrichtung ist die Kupplung 2.6 auch hier mit einem ringförmigen Montageelement 18.6 versehen. Zur radialen Klemmung dieses Montageelementes 18.6 an einer Innenfläche des Tubus 17.6 ist im Montageelement 18.6 ein Klemmelement in Form einer Exzenterschraube 18a.6 vorgesehen. Der Kopf dieser Exzenterschraube 18a.6 weist eine exzentrisch verlaufende Umfangsfläche U auf, die durch Drehen mit dem Tubus 17.6 in Kontakt tritt und eine radiale Klemmkraft zwischen dem Montageelement 18.6 und dem Stator 3.6 hervorruft. Das Montageelement 18.6 wird im gezeigten Beispiel mit den Anschlagflächen 30 an eine Innenwand des Tubus 17.6 gedrückt. In Figur 7 ist schematisch ein Querschnitt der Vorrichtung nach Figur 6 dargestellt.

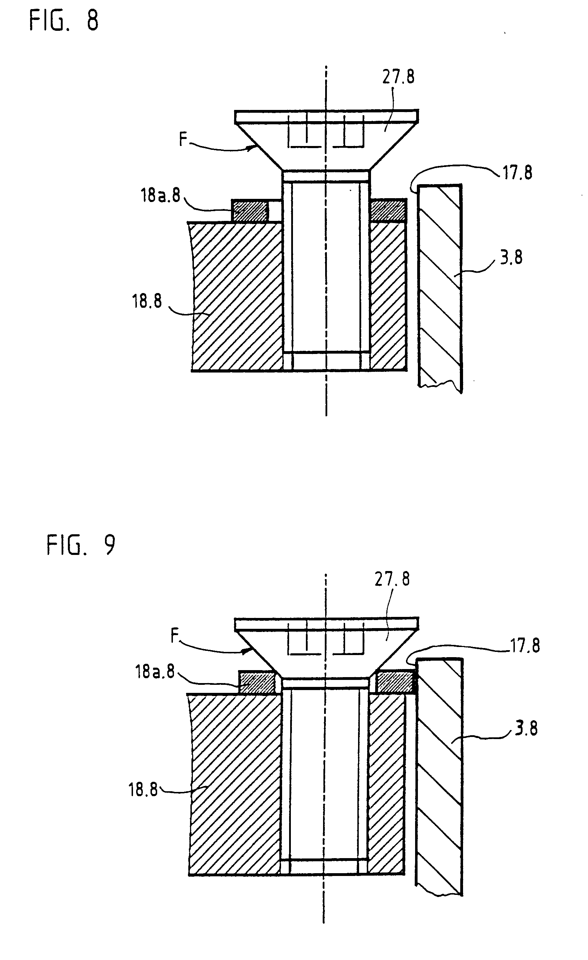

In Figur 8 ist ein weiteres Ausführungsbeispiel zur radialen Klemmung eines Montageelementes 18.8 schematisch dargestellt. Anstelle der Exzenterschraube wird eine Senkkopfschraube 27.8 als Betätigungselement eingesetzt. Die konische Fläche F der Senkkopfschraube 27.8 wirkt beim Eindrehen in das Montageelement 18.8 auf eine Unterlegscheibe 18a.8 ein und verschiebt diese radial nach außen, wie in Figur 9 zu sehen ist. Die Unterlegscheibe 18a.8 ist somit das Klemmelement, welches eine radiale Klemmung des Montageelementes 18.8 innerhalb des Tubus 17.8 des Stators 3.8 bewirkt. Wie bereits erwähnt, so kann auch hier mittels der Senkkopfschraube 27.8 direkt ein Teil des Montageelementes 18.8 selbst deformiert werden und die Klemmung bewirken.

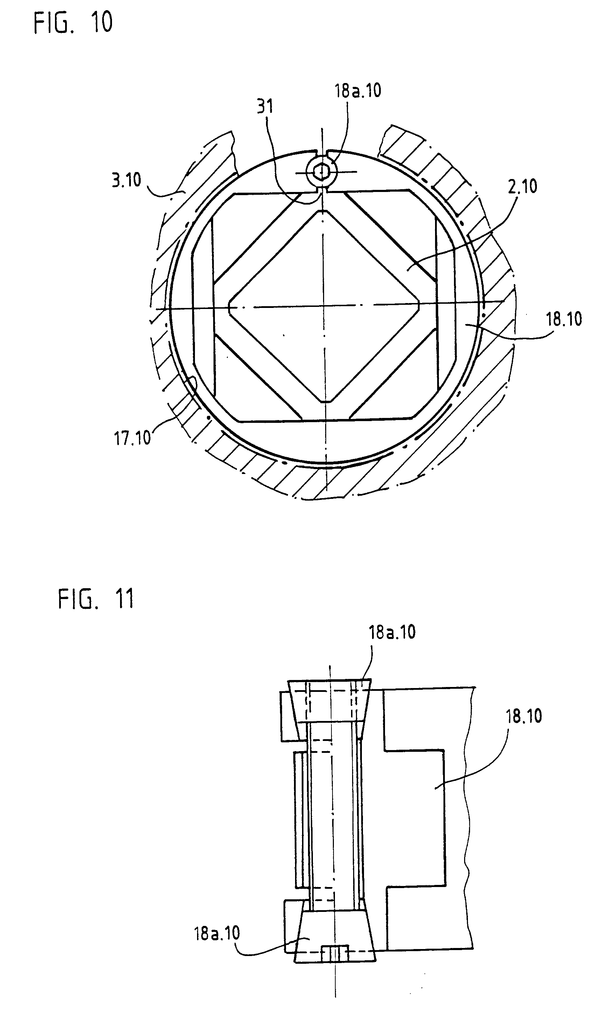

In den Figuren 10 und 11 ist schematisch ein weiteres Ausführungsbeispiel dargestellt. Die Kupplung 2.10 zum radialen und axialen Ausgleich ist an dem ringförmigen Montageelement 18.10 befestigt. In diesem Montageelement 18.10 ist zumindest ein radial verlaufender Schlitz 31 vorgesehen. Dieser Schlitz 31 teilt das Montageelement 18.10 derart, daß der äußere Durchmesser des Montageelementes 18.10 durch ein im Schlitz 31 wirkendes Klemmelement 18a.10 vergrößert werden kann. Dieses Spreizen des Montageelementes 18.10 erfolgt durch zwei in axialer Richtung beabstandet hintereinander angeordnete Klemmelemente 18a.10. Diese Klemmelemente 18a.10 weisen gegenläufige konische Oberflächen auf, die sich an korrespondierenden Oberflächen des Montageelementes 18a.10 abstützen. Eines dieser Klemmelemente 18a.10 ist im gezeigten Beispiel eine Schraube und das andere eine Mutter. Durch Drehen der Schraube werden die beiden Klemmelemente 18a.10 aneinander gezogen, wodurch sich der Spalt 31 vergrößert. Die Schraube kann auch als Betätigungselement bezeichnet werden. In nicht gezeigter Weise kann sich die Schraube auch nur in axialer Richtung an einer ebenen Fläche abstützen, so daß nur die Mutter als Klemmelement dient. Zur Verdeutlichung ist in Figur 11 ein Querschnitt des Klemmelementes 18a.10 im Schlitz 31 vergrößert dargestellt.

Bei den bisher beschriebenen Ausführungsbeispielen erfolgte die Befestigung der Kupplung 2 an der Winkelmeßeinrichtung 1 mittels Schrauben. Diese Schrauben können in der Regel leicht eingebracht werden. Sollte es aber aus Platzgründen Probleme bei dieser Vormontage geben, so besteht auch hier die Möglichkeit, ein Montageelement - beispielsweise einen Ring - vorzusehen, an dem die Kupplung befestigt ist, und das durch radiale Klemmung mit dem Stator der Winkelmeßeinrichtung undrehbar verbindbar ist.

Bei allen Ausführungsbeispielen mit radialer Klemmung wirkt die Klemmung an einer inneren Umfangsfläche. Diese Umfangsfläche ist eine Fläche, die zur Drehachse weist oder wegweist.

Der Begriff radial definiert eine Richtung, die zumindest weitgehend senkrecht zur Drehachse D verläuft.

Besonders vorteilhaft ist gemäß der Erfindung die Möglichkeit, alle zur Montage der Kupplung 2 an den Stator 3 benötigten Teile 18 innerhalb der Baulänge der Kupplung 2 und der Winkelmeßeinrichtung 1 selbst anzuordnen.

Gleiche Elemente und gleichwirkende Elemente sind mit gleichem Bezugszeichen versehen, denen die Figurenbezifferung als Index nachgestellt ist.

## Patentansprüche

1. Winkelmeßeinrichtung (1) zur Messung der Winkellage zwischen einem stationären Objekt (3) und einem hierzu relativ drehbaren Objekt (5, 5'), bei der eine Maßverkörperung von einer Abtasteinheit abgetastet wird, die über einen Stator (10) der Winkelmeßeinrichtung (1) mit dem stationären Objekt mittels einer Kupplung (2) verdrehsteif, jedoch radial und axial nachgiebig verbunden ist, indem die Kupplung (2) einerseits am Stator (10) der Winkelmeßeinrichtung (1) und andererseits an einer inneren Umfangsfläche (17) des stationären Objektes (3) befestigt ist, **dadurch gekennzeichnet, daß** die Befestigung an der inneren Umfangsfläche (17) durch Klemmung zwischen der Kupplung (2) und dem stationären Objekt (3) an der inneren Umfangsfläche (17) des stationären Objektes (3) erfolgt und zur Klemmung ein Klemmelement (18a) zur Erzeugung einer radialen Klemmkraft zwischen der Kupplung (2) und der Umfangsfläche (17) angeordnet ist.

2. Winkelmeßeinrichtung nach Anspruch 1, **dadurch gekennzeichnet, daß** das Klemmelement (18a) an ein Montageelement (18) angebracht ist, und das das Montageelement (18) ein zwischen dem stationären Objekt (3) und der Kupplung (2) angeordneter ringförmiger Körper ist.

3. Winkelmeßeinrichtung nach Anspruch 1 oder 2, **dadurch gekennzeichnet, daß** das Klemmelement (18a) verschiebbar, verdrehbar oder verformbar ist, um eine radiale Klemmung zwischen dem Montageelement (18) und dem stationären Objekt (3) zu bewirken.

4. Winkelmeßeinrichtung nach Anspruch 3, **dadurch gekennzeichnet, daß** mit dem Klemmelement (18a) der Durchmesser des Montageelementes (18) veränderbar ist und eine Fläche des Montageelementes (18) an die Umfangsfläche (17) des stationären Objektes (3) andrückbar ist.

5. Winkelmeßeinrichtung nach einem der vorhergehenden Ansprüche 2 bis 4, **dadurch gekennzeichnet, daß** das Klemmelement (18a) und/oder ein Betätigungselement (27) eine schräg zur Drehachse (D) verlaufende Fläche (18b, 18d, F) aufweist, und durch axiale Verschiebung des Betätigungselementes (27) das Klemmelement (18a) radial verschoben wird und/oder der Durchmesser des Montagelementes (18) verändert wird.

6. Winkelmeßeinrichtung nach Anspruch 5, **dadurch gekennzeichnet, daß** das Betätigungselement (27) eine Schraube mit angeformter konischer Fläche (F) ist.

7. Winkelmeßeinrichtung nach Anspruch 3, **dadurch gekennzeichnet, daß** das Klemmelement (18a) eine exzentrische Oberfläche (U) aufweist und um eine Achse parallel zur Drehachse (D) im Montageelement (18) drehbar angeordnet ist, wobei durch die exzentrische Oberfläche (U) die radiale Klemmung bewirkt wird.

8. Winkelmeßeinrichtung nach Anspruch 7, **dadurch gekennzeichnet, daß** die exzentrische Oberfläche (U) des drehbaren Klemmelementes (18a) mit einer Fläche (17) des stationären Objektes (3) in Kontakt bringbar ist.

9. Winkelmeßeinrichtung nach einem der vorhergehenden Ansprüche, **dadurch gekennzeichnet, daß** die Kupplung (2) aus zwei orthogonal angeordneten Parallelogrammen (6, 7; 8, 9) besteht.

10. Winkelmeßeinrichtung nach Anspruch 9, **dadurch gekennzeichnet, daß** jedes Parallelogramm (6, 7; 8, 9) aus parallel zueinander angeordneten Blattfedern besteht und zumindest die Blattfedern (8, 9) eines Parallelogrammes zur radialen Klemmung am stationären Objekt (3) Klemmelemente (8a, 8b; 9a, 9b) aufweisen.

11. Winkelmeßeinrichtung nach einem der vorhergehenden Ansprüche, **dadurch gekennzeichnet, daß** das stationäre Objekt (3) einen Montagetubus (17) aufweist, dessen innere Mantelfläche zur radialen Klemmung der Kupplung (2) dient.

12. Winkelmeßeinrichtung nach Anspruch 11, **dadurch gekennzeichnet, daß** das Klemmelement (18a) oder ein mit dem Klemmelement (18a) zusammenwirkendes Betätigungselement (27) parallel zur Drehachse (D) zugänglich und betätigbar ist.

13. Winkelmeßeinrichtung nach Anspruch 11 oder 12, **dadurch gekennzeichnet, daß** der Montagetubus (17) Bestandteil eines Motors (4) ist.

14. Winkelmeßeinrichtung nach einem der vorhergehenden Ansprüche, **dadurch gekennzeichnet, daß** die Kupplung (2) durch radiale Klemmung am Stator (10) der Winkelmeßeinrichtung (1) befestigt ist.

## Claims

1. Angular position measuring device (1) for measuring the angular position between a stationary object (3) and an object (5, 5') which is rotatable relative hereto, in which a material measure is scanned by a scanning unit which is connected via a stator (10) of the angular position measuring device (1) to the stationary object by means of a coupling (2) in a torsion-proof manner but non-rigidly radially and axially, the coupling (2) being attached, on the one hand, to the stator (10) of the angular position measuring device (1) and, on the other hand, to an internal circumferential face (17) of the stationary object (3), **characterised in that** the attachment to the internal circumferential face (17) is effected by clamping between the coupling (2) and the stationary object (3) on the internal circumferential face (17) of the stationary object (3) and, for clamping, a clamping element (18a) is disposed in order to produce a radial clamping force between the coupling (2) and the circumferential face (17).

2. Angular position measuring device according to claim 1, **characterised in that** the clamping element (18a) is fitted on a mounting element (18) and **in that** the mounting element (18) is an annular element disposed between the stationary object (3) and the coupling (2).

3. Angular position measuring device according to claim 1 or 2, **characterised in that** the clamping element (18a) is displaceable, rotatable or deformable in order to effect a radial clamping between the mounting element (18) and the stationary object (3).

4. Angular position measuring device according to claim 3, **characterised in that** the diameter of the mounting element (18) can be altered with the clamping element (18a) and a face of the mounting element (18) can be pushed against the circumferential face (17) of the stationary object (3).

5. Angular position measuring device according to one of the preceding claims 2 to 4, **characterised in that** the clamping element (18a) and/or an actuation element (27) has a face (18b, 18d, F) extending diagonally relative to the axis of rotation (D) and, by axial displacement of the actuation element (27), the clamping element (18a) is displaced radially and/or the diameter of the mounting element (18) is altered.

6. Angular position measuring device according to claim 5, **characterised in that** the actuation element (27) is a screw with a moulded conical face (F).

7. Angular position measuring device according to claim 3, **characterised in that** the clamping element (18a) has an eccentric surface (U) and is disposed rotatably in the mounting element (18) about an axis which is parallel to the axis of rotation (D), the radial clamping being effected by the eccentric surface (U).

8. Angular position measuring device according to claim 7, **characterised in that** the eccentric surface (U) of the rotatable clamping element (18a) can be brought into contact with a face (17) of the stationary object (3).

9. Angular position measuring device according to one of the preceding claims, **characterised in that** the coupling (2) comprises two orthogonally disposed parallelograms (6, 7; 8, 9).

10. Angular position measuring device according to claim 9, **characterised in that** each parallelogram (6, 7; 8, 9) comprises leaf springs which are disposed parallel to each other and at least the leaf springs (8, 9) of one parallelogram have clamping elements (8a, 8b; 9a, 9b) for radial clamping to the stationary object (3).

11. Angular position measuring device according to one of the preceding claims, **characterised in that** the stationary object (3) has a mounting tube (17), the internal surface area of which serves for radial clamping of the coupling (2).

12. Angular position measuring device according to claim 11, **characterised in that** the clamping element (18a) or an actuation element (27) cooperating with the clamping element (18a) is accessible and actuatable parallel to the axis of rotation (D).

13. Angular position measuring device according to claim 11 or 12, **characterised in that** the mounting tube (17) is a component of a motor (4).

14. Angular position measuring device according to one of the preceding claims, **characterised in that** the coupling (2) is attached by radial clamping to the stator (10) of the angular position measuring device (1).

## Revendications

1. Dispositif de mesure d'angles (1) pour mesurer la position angulaire entre un objet stationnaire (3) et un objet (5, 5') pouvant tourner par rapport au premier, dans lequel une règle de mesure est palpée par une unité de palpage qui est liée par un moyen de couplage (2) de manière rigide en rotation mais souple dans les directions radiale et axiale à l'objet stationnaire, via un stator (10) du dispositif de mesure d'angles (1), par le fait que le moyen de couplage (2) est fixé d'un côté au stator (10) du dispositif de mesure d'angles (1) et de l'autre côté à une surface périphérique intérieure (17) de l'objet stationnaire (3), **caractérisé en ce que** la fixation à la surface périphérique intérieure (17) s'effectue par serrage entre le moyen de couplage (2) et l'objet stationnaire (3), contre la surface périphérique intérieure (17) de l'objet stationnaire (3), et **en ce que**, en vue du serrage, un élément de serrage (18a) est disposé pour produire une force de serrage radiale entre le moyen de couplage (2) et la surface périphérique (17).

2. Dispositif de mesure d'angles selon la revendication 1, **caractérisé en ce que** l'élément de serrage (18a) est fixé à un élément de montage (18) et que l'élément de montage (18) est un corps annulaire placé entre l'objet stationnaire (3) et le moyen de couplage (2).

3. Dispositif de mesure d'angles selon la revendication 1 ou 2, **caractérisé en ce que** l'élément de serrage (18a) peut être déplacé en translation, tourné ou déformé, afin d'obtenir un serrage radial entre l'élément de montage (18) et l'objet stationnaire (3).

4. Dispositif selon la revendication 3, **caractérisé en ce que** l'élément de serrage (18a) permet de modifier le diamètre de l'élément de montage (18) et qu'une surface de l'élément de montage (18) peut être appliquée contre la surface périphérique (17) de l'objet stationnaire (3).

5. Dispositif selon l'une quelconque des revendications précédentes 2 à 4, **caractérisé en ce que** l'élément de serrage (18a) et/ou un élément d'actionnement (27) présente une surface (18b, 18d, F), s'étendant en biais par rapport à l'axe de rotation (D), et **en ce que** le déplacement axial de l'élément d'actionnement (27) a pour effet de déplacer l'élément de serrage (18a) dans la direction radiale et/ou de modifier le diamètre de l'élément de montage (18).

6. Dispositif selon la revendication 5, **caractérisé en ce que** l'élément d'actionnement (27) est une vis présentant une surface (F) conique.

7. Dispositif selon la revendication 3, **caractérisé en ce que** l'élément de serrage (18a) présente une surface excentrique (U) et est disposé dans l'élément de montage (18) avec possibilité de rotation autour d'un axe parallèle à l'axe de rotation (D), la surface excentrique (U) provoquant un serrage radial.

8. Dispositif selon la revendication 7, **caractérisé en ce que** la surface excentrique (U) de l'élément de serrage (18a) tournant peut être amenée en contact avec une surface (17) de l'objet stationnaire (3).

9. Dispositif selon l'une quelconque des revendications précédentes, **caractérisé en ce que** le moyen de couplage (2) se compose de deux parallélogrammes (6, 7; 8, 9) disposés de façon orthogonale.

10. Dispositif selon la revendication 9, **caractérisé en ce que** chaque parallélogramme (6, 7; 8, 9) est constitué de lames de ressort mutuellement parallèles et qu'au moins les lames de ressort (8, 9) d'un parallélogramme comportent des éléments de serrage (8a, 8b; 9a, 9b) en vue du serrage radial sur l'objet stationnaire.

11. Dispositif selon l'une quelconque des revendications précédentes, **caractérisé en ce que** l'objet stationnaire (3) comprend un tube de montage (17) dont la surface enveloppe intérieure est destinée à assurer le serrage radial du moyen de couplage (2).

12. Dispositif selon la revendication 11, **caractérisé en ce que** l'élément de serrage (18a) ou un élément d'actionnement (27) coopérant avec l'élément de serrage (18a) est accessible et actionnable parallèlement à l'axe de rotation (D).

13. Dispositif selon la revendication 11 ou 12, **caractérisé en ce que** le tube de montage (17) fait partie intégrante d'un moteur (4).

14. Dispositif selon l'une quelconque des revendications précédentes, **caractérisé en ce que** le moyen de couplage (2) est fixé par serrage radial au stator (10) du dispositif de mesure d'angles (1).
